# EUROPEAN PATENT APPLICATION

(11) **EP 1 890 086 A1**
(43) Date of publication of application: **20.02.2008**
(21) Application number: 06746687.0
(22) Date of filing: 22.05.2006
(51) Int. Cl.: F24D 13/04, F24D 3/00, H05B 3/40

(54) **COMPOSITE HEATER AND HEATING SYSTEM WITH THE COMPOSITE HEATER**

(30) Priority: 31.05.2005 JP 2005159079
(71) Applicant: Nippon Oil Corporation, Tokyo 105-8412 (JP)
(72) Inventor: KONO, Takefumi, c/o Nippon Oil Corporation, Tokyo 1058412 (JP); KOJIMA, Akiyoshi, c/o Nippon Oil Corporation, Tokyo 105841 2 (JP); KOUCHI, Takeshi, c/o Nippon Oil Corporation, Tokyo 1058412 (JP); GOTOU, Tadayuki, c/o Nippon Oil Corporation, Tokyo 1058412 (JP); HORI, Koji, c/o Nippon Oil Corporation, Tokyo 1058412 (JP)
(74) Representative: Hamer, Christopher K.
(86) International application number: PCT/JP2006/310153
(87) International publication number: WO 2006/129511

(57) **Abstract**

An object of the present invention is to provide a highly-reliable combined heater. Heater 1 includes hot water pipe 1 a for allowing hot water to flow therethrough, and metal pipe 1 b that is coaxial with hot water pipe 1 a and that is secured in contact with an inner peripheral surface of the hot water pipe.

## Description

### Technical Field

The present invention relates to a combined heater that is suitable for use in in-building space heating, such as floor heating, and to a space heating system which includes the combined heater.

### Related Art

Floor heating systems are generally classified into hot water type and electric type. A hot water type floor heating system has a panel in which hot water pipes are embedded and which is installed between a subfloor and a floor-finishing material. Hot water is produced by utilizing heat that is generated by a heat source device, such as a boiler, a heat pump or fuel cells, and a room is heated by circulation of the hot water produced through the hot water pipes. An electric type floor heating system has a panel in which electric heaters are embedded and which is installed between a subfloor and a floor-finishing material, and a room is heated by application of current to the electric heaters.

Furthermore, Japanese Patent Laid-Open Publication No. 306926/98 discloses a space heating apparatus having a copper wire that is inserted into a hot water pipe over the entire length thereof and that works as an electric heater. According to this heating apparatus, space heating is performed by applying current to the copper wire and thereby heating water that is filled in the hot water pipe. As the copper wire, an extra-fine wire, such as one having a diameter of 0.3 to 0.5 mm, is used in order to secure a sufficient calorific value.

### Disclosure of the Invention

However, since the art disclosed in Japanese Patent Laid-Open Publication No. 10-306926 has a configuration in which an extra-fine copper wire is inserted into the hot water pipe over the entire length thereof, the copper wire may break when the copper wire is inserted into the hot water pipe, or when the hot water pipe is installed, or as a result of repeating thermal expansion and contraction of the copper wire after installation, etc. In addition, although night time power, which is low-cost power, can be used for nighttime space heating, daytime space heating is costly due to the power charge rate.

Meanwhile, in hot water type space heating systems, hot water that is produced is also used for hot water supply, and a hot water storage tank for storing the hot water produced is provided in order to flexibly respond to changes in the amount that is used.

When an electric heat pump is used as a heat source device, hot water is produced during night time and stored in the hot water storage tank, taking into account the electricity rates. A certain period of time is required for hot water production, so if the capacity of the hot water storage tank is increased according to the amount used (amount of hot water supply) during daytime to avoid hot water shortages, a disadvantage will occur in that a larger space is required to install the hot water storage tank. Also, when a long period of time has passed without the hot water in the hot water storage tank being used for hot water supply, and the amount of hot water is not reduced, or when only space heating is performed and the hot water returns to the hot water storage tank at a lowered temperature that is caused by heat release, the temperature of the hot water in the hot water storage tank will decrease. Accordingly, it is necessary to re-heat the hot water in the hot water storage tank, but re-heating the hot water in the hot water storage tank will cause additional costs. In addition, the temperature of the re-heated hot water will decrease while the hot water is introduced into a building for space heating, causing thermal loss.

If a combined heat and power supply cogeneration system or household fuel cells are used for the heat source device, a steady operation will be necessary in order to maintain steady power generation efficiency, and the amount of hot water that is discharged will be substantially constant. As the power generation efficiency becomes higher, the heat generated will decrease, and the amount of hot water discharged will also decrease. If the amount of hot water discharged is determined according to the amount used in the summer, then an additional amount used for space heating will be required in winter, causing hot water shortages, because space heating is not used and the hot water is used mostly for hot water supply in summer. On the contrary, if the power generation capacity and hot water storage capacity are increased taking into account the amount used for space heating in winter as well, there will be excess hot water in summer, and such excess hot water will not be able to be utilized. Also, the excess power due to a decrease in power consumption, which may occur, for example, due to absence of residents, can be used to re-heat hot water in the hot water storage tank, but still, heat loss will occur as a result of the gradual release of heat.

Accordingly, an object of the present invention is to provide a combined heater that is highly reliable and that enables highly-efficient space heating, and a space heating system using the same.

In order to achieve the above object, a combined heater according to the present invention comprises a hot water pipe for allowing hot water to flow therethrough; and a heating element that is secured in contact with an outer peripheral surface or an inner peripheral surface of the hot water pipe, the heating element generating heat by the application of current.

Furthermore, a combined heater according to the present invention comprises: a hot water pipe for allowing hot water to flow therethrough; a panel-shaped base material having a groove that is formed on an upper surface thereof, the base material accommodating the hot water pipe in the groove; a heating element that is secured to the upper surface of the base material, to a lower surface of the base material, or inside of the base material, the heating element generating heat by the application of current; and a heat-uniformizing material that is provided over the upper surface of the base material.

In the combined heater according to the present invention, the heating element is secured in contact with the outer peripheral surface or the inner peripheral surface of the hot water pipe, or secured to the panel-shaped base material. In this way, as a result of securing the heating element to the hot water pipe or base material, the position of the heating element will be stable, and consequently, the heating element can be prevented from being broken. The heating element that is secured to the hot water pipe provides a pipe-shaped heater, and the heating element that is secured to the base material provides a panel-shaped heater. However, the pipe-shaped heater can also be constructed as a panel-shaped heater by accommodating the hot water pipe having the heating element secured thereto in the panel-shaped base material. A metal pipe or a heating cable can be preferably used for the heating element, and a sheet-shaped heating element can be preferably used for the panel-shaped heater.

A space heating system according to the present invention comprises: a combined heater according to the present invention mentioned above; a heat source device that produces hot water by heating water; a hot water storage unit that stores the hot water, the hot water being produced by the heat source device; a hot water pipe for circulating the hot water in the hot water storage unit between the combined heater and the hot water storage unit; and a controller that controls operation of the heating element in the combined heater.

In the space heating system according to the present invention, the combined heater includes the hot water pipe and the heating element. Therefore, it is possible to conduct space heating both by feeding the hot water that is produced by the heat source device to the hot water pipe and by applying current to the heating element. Further, by applying current to the heating element to heat the hot water in the hot water pipe, and by circulating the hot water between the hot water storage unit and the hot water pipe, a temperature decrease of the hot water in the hot water storage unit can be prevented. Accordingly, suitable control of the operation of the heating element by using the controller eliminates the need for re-heating the hot water in the hot water storage unit, and makes it possible to directly heat the hot water in the combined heater. This eliminates heat loss from the hot water as the hot water flows from the hot water storage unit to the combined heater, and consequently, enables highly-efficient space heating.

More specifically, the hot water storage unit comprises a tank that stores the hot water, and a temperature sensor that measures the temperature of the hot water in the tank, and the controller applies current to the heating element when the temperature that is measured is lower than a predetermined temperature for controlling the application of current, and discontinues an application of current to the heating element when the temperature that is measured is not lower than the temperature for controlling the application of current. Accordingly, the temperature of the hot water in the hot water storage unit will be kept substantially constant, eliminating the need for re-heating the hot water in the hot water storage unit. In addition, there will be no need for excessively increasing the capacity of the tank for space heating, so the hot water storage unit can be downsized.

As described above, according to the present invention, a highly-reliable combined heater whose heating element will not break during manufacture or during use can be obtained. Also, by using the combined heater according to the present invention, not only space heating using hot water, but also both space heating and hot water heating by appying current to the heating element can be conducted, so efficient heating can be achieved.

### Brief Description of the Drawings

Figure 1 is a perspective view of a combined heater according to an embodiment of the present invention;
Figure 2A is an exemplary plan view of a panel in which the heater shown in Figure 1 is embedded;
Figure 2B is a cross-sectional view of the panel shown in Figure 2A taken along line B-B;
Figure 3 is a perspective view of another example of the combined heater according to the present invention;
Figure 4 is a perspective view of still another example of the combined heater according to the present invention;
Figure 5 is a cross-sectional view of yet another example of the combined heater according to the present invention, which is constructed as a panel; and
Figure 6 is a schematic diagram of an example of a space heating system according to the present invention.

### Description of reference numerals

1, 2, 3 heater
1 a, 2a, 3a, 21 hot water pipe
1 b, 2b metal pipe
3b heating cable
10, 20 panel
12, 22 base material
12a groove
13, 23 heat-uniformizing plate
24 sheet-shaped heating element
101 heat source device
102 hot water storage unit
103 combined heater unit
104 controller

### Best Mode for Carrying Out the Invention

Next, embodiments of the present invention will be explained with reference to the drawings.

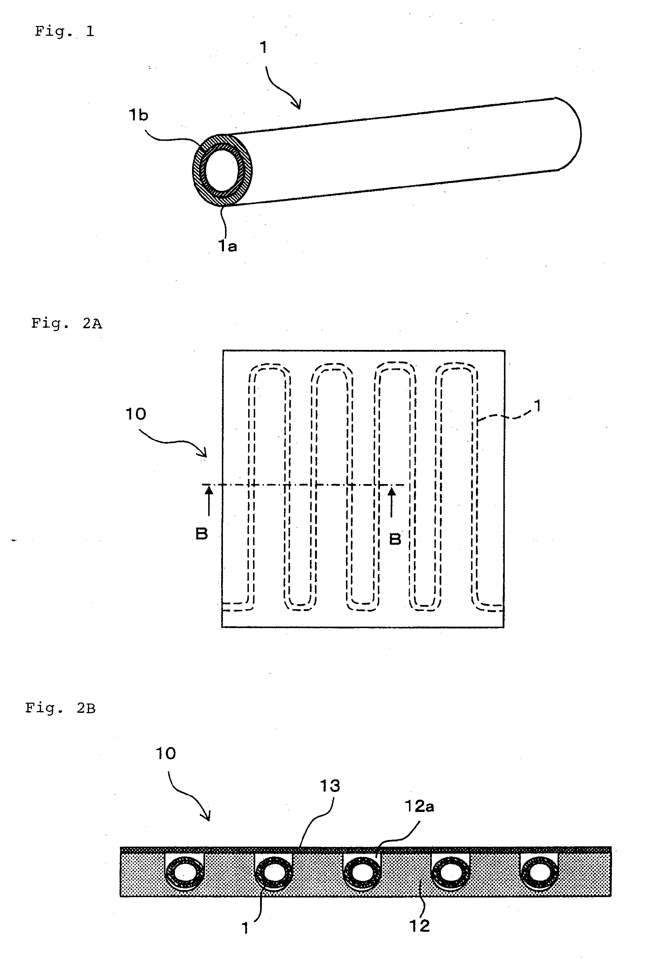

Figure 1 is a perspective view of a combined heater according to an embodiment of the present invention. Heater 1 shown in Figure 1 includes hot water pipe 1 a, and metal pipe 1 b that is coaxial with hot water pipe 1 a and that is secured in contact with the inner surface of hot water pipe 1 a. Metal pipe 1 b functions as a heating element, and generates heat by application of current to metal pipe 1 b. For a metal that constitutes metal pipe 1 b, a metal that generates heat by the application of current can be suitably used. The inner surface of metal pipe 1 b is water-proofed and insulated. Hot water pipe 1a can be formed from any material, such as a metal or synthetic resin, that has heat release characteristics.

Heater 1 can be used for room heating, especially for floor heating. When heater 1 is used for floor heating, heater 1 is installed by routing it on a subfloor (not shown) according to a suitable routing pattern, and a floor-finishing material (shown) is further provided on heater 1. In order to route heater 1, heater 1 itself may be flexible, or may be constructed in a desired pattern by preparing and combining elements in suitable shapes, such as linear, curved and bended shapes.

According to heater 1 thus constructed, hot water that is produced using heat that is generated by a heat source device, such as a boiler, a heat pump or fuel cells, is stored in a hot water storage tank (not shown) first, and then is caused to flow through heater 1 to heat a room with heat that is released during that time. Also, according to heater 1, hot water in heater 1 can also be heated by applying current to metal pipe 1 b to make metal pipe 1 b generate heat. In other words, hot water can be heated by heating heater 1 itself. It should be noted that since metal pipe 1 b which is secured in contact with hot water pipe 1 a is used as a heating element, the position of metal pipe 1 b is stabilized relative to hot water pipe 1 a, and there is no possibility that the heating element may break during installation or use.

Heater 1 may be directly provided above the subfloor. However, in actual installation, heater 1 is preferably incorporated in a panel from the standpoint of facilitating easy installation. Figure 2A is a plan view of an example of panel 10 that includes heater 1. Also, Figure 2B is a cross-sectional view taken along line B-B of Figure 2A.

Panel 10 includes plate-like base material 12, heat-uniformizing plate 13 that is attached so as to cover the surface of base material 12, and heater 1 that is provided between base material 12 and heat-uniformizing plate 13. For base material 12, any material that ensures mechanical strength and heat-insulating performance that is required for panel 10 can be used, and for example, a foamed resin plate can be used. The structure of base material 12 can be arbitrarily determined, and it may be a single-layer structure, or a laminated structure. Groove 12a is formed on the upper surface of base material 12 in accordance with the routing pattern of heater 1, and heater 1 is accommodated in groove 12a. Heat-uniformizing plate 13 uniformly distributes heat that is generated by heater 1 in in-plate directions and conveys the heat to the floor-finishing material. Heat-uniformizing plate 13 covers the upper surface of base material 12 in a state in which heater 1 is accommodated in groove 12a. For heat-uniformizing plate 13, a foil, a plate, or the like, of a metal, such as aluminum or copper, can be used.

When panel 10 is used for floor heating, a plurality of panels 10 are jointed together so that heater 1 forms one hot water flow path. Therefore, both ends of heater 1 are exposed on end surfaces of panel 10, and panels 10 that are adjacent to each other are jointed so that the ends of heaters 1 are connected with each other. In order to connect the ends of heaters 1 with each othe, a joint or the like is used to prevent hot water leakage and to electrically connect the metal pipes 1 b to each other.

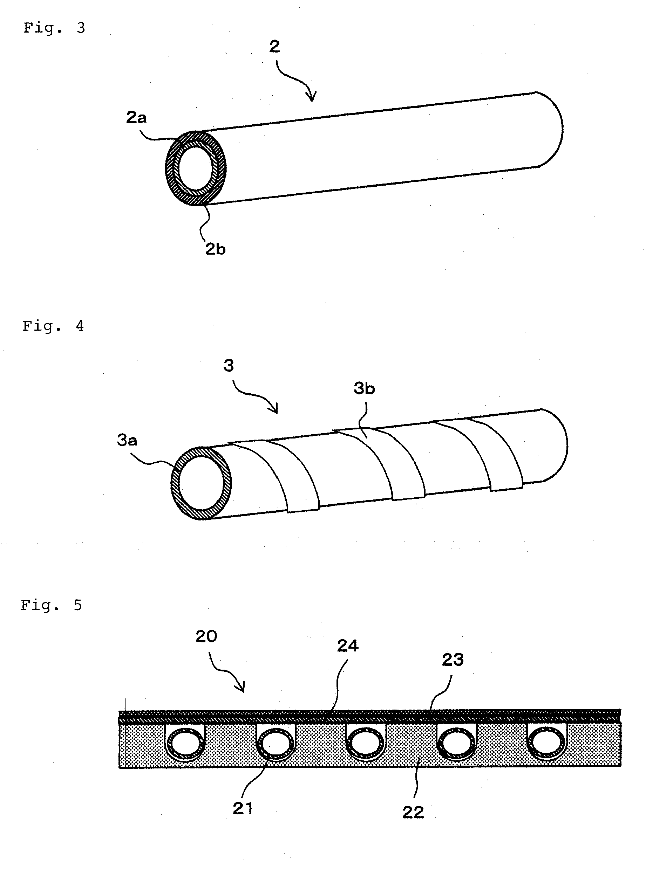

Figures 3 and 4 show other examples of the combined heater according to the present invention.

In heater 2 shown in Figure 3, metal pipe 2b, which is a heating element, is secured coaxially with and in contact with the outer peripheral surface of hot water pipe 2a. As a result of disposing the heating element on the outer peripheral surface of hot water pipe 2a, the heating element will not be in contact with hot water. Consequently, even when metal pipe 2b is used for a heating element, there will be no need to water-proof metal pipe 2b. Also, insulating will not be required if an insulating material, such as a synthetic resin pipe, is used as hot water pipe 2a.

Heater 3 shown in Figure 4 is one that is formed by spirally winding heating cable 3b, which is a heating element, around the outer peripheral surface of hot water pipe 3a. This configuration is advantageous in that a general-purpose product can be used for hot water pipe 3a and heating cable 3b. Also, Figure 4 shows an example in which heating cable 3b is disposed on the outer peripheral surface of hot water pipe 3a. However, heating cable 3b may be secured in contact with the inner peripheral surface of hot water pipe 3a in spirals, or it may be embedded in the pipe wall in spirals.

Figure 5 shows another example of the heater panel according to the present invention.

In the above-described examples, the hot water pipe itself is provided with a heating element. However, in this example, the heating element is constructed separately from the hot water pipe. More specifically, panel 20 includes base material 22, hot water pipe 21 that is accommodated in base material 22, sheet-shaped heating element 24 secured over the upper surface of base material 22, and heat-uniformizing plate 23 that is further provided over sheet-shaped heating element 24.

Hot water pipe 21 is similar to one that is generally used in hot water space heating systems, and is accommodated in a groove that is formed in base material 22. Sheet-shaped heating element 24 is not limited to specific configurations, but it is preferable to use one that uses carbon fiber as a heat generation resistor from the viewpoint of durability. Further, as a result of using sheet-shaped heating element 24 that uses carbon fiber as a heat generation resistor, hot water in hot water pipe 21 will be heated, and in addition, the effect that the room is heated by far-infrared radiation can also be expected. The thickness of sheet-shaped heating element 24 is preferably 2 mm or less, and more preferably 0.8 mm or less. Examples of sheet-shaped heating element 24 described above include fiber-reinforced resin moldings, such as one disclosed in Japanese Patent Laid-Open Publication No. 207191/96, which are prepared by connecting conductive fibers and electrodes at both ends of a network structure, which is formed by jointing intersecting points of non-conductive fibers and conductive fibers, and then by embedding the structure in a resin or by depositing a fiber-reinforced prepreg sheet on the structure.

For base material 22 and heat-uniformizing plate 23, members similar to those described above can be used, so the explanation thereof is omitted.

An example in which sheet-shaped heating element 24 is provided on the upper surface side of heater panel 20 is described in the embodiment. However, sheet-shaped heating element 24 may be secured to the lower surface of base material 22, or may be embedded in base material 22. Furthermore, the heating element that is provided on panel 20 is not limited to sheet-shaped heating element 24, and various kind of members, such as a metal plate or a heating cable, that generate heat by the application of current can be used.

Next, a space heating system that uses the combined heater according to the present invention will be explained.

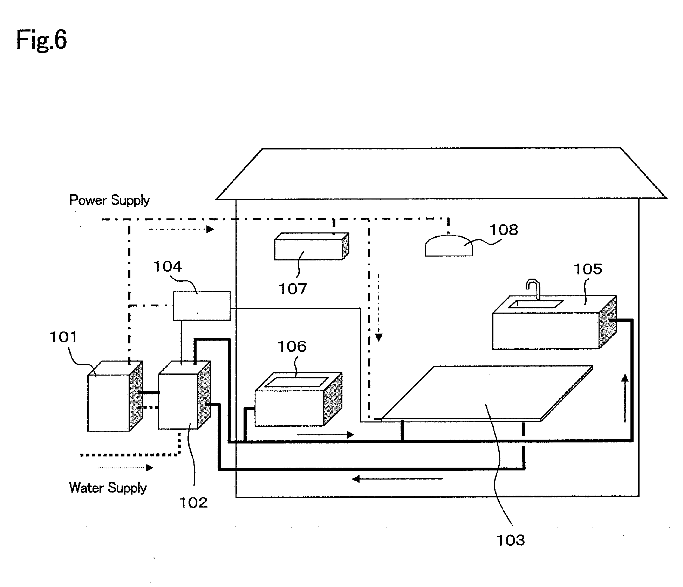

Figure 6 is a schematic diagram of an example of the space heating system according to the present invention. The space heating system shown in Figure 1 includes heat source device 101 that produces hot water by heating water, hot water storage unit 102 that stores hot water that is produced by heat source device 101, combined heater unit 103, and controller 104 that controls them. Heat source device 101 and hot water storage unit 102 are installed outside the building, and combined heater unit 103 is installed inside the building. Further, in addition to combined heater unit 103, hot water supply equipments, such as kitchen unit 105 and bath tub 106, and electric products, such as air-conditioner 107 and lighting 108 are installed inside the building.

For heat source device 101, for example, a power generation unit, such as fuel cells or a gas engine, or a heat pump can be used.

When a power generation unit is used as heat source device 101, gas is used as fuel for power generation, and the power obtained is supplied to the electric apparatus, such as air-conditioner 107 and lighting 108, and to controller 104. Hot water is produced using heat that is generated through power generation, and the hot water produced is stored in hot water storage unit 102. When the power generation unit does not operate, electric power that is supplied from an electric company is supplied to the electric apparatus.

Meanwhile, when a heat pump is used as heat source device 101, the heat pump is operated by electric power that is supplied from an electric company, and hot water is produced from heat in the air. The hot water produced is stored in hot water storage unit 102.

Hot water storage unit 102 is connected to hot water supply equipment, such as kitchen unit 105 and bath tub 106, as well as to combined heater unit 103 via hot water pipes. The hot water stored in hot water storage unit 102 is used in hot water supply equipments, such as kitchen unit 105 and bath tub 106, as needed, and is also supplied to combined heater unit 103. Hot water that is supplied to combined heater unit 103 passes through a hot water channel in combined heater unit 103, and then returns to hot water storage unit 102 via a return hot water pipe.

Combined heater unit 103 includes a combined heater in which a hot water pipe and a heating element are combined, such as in heater 1 shown in Figure 1, in panel 10 shown in Figure 2A and in panel 20 shown in Figure 5, and is constructed as a floor heating panel in this embodiment. Also, a combined heater is arbitrarily combined with other combined heaters for installation depending on the area or the surface configuration of the region where the combined heaters are installed. In order to operate the heating element, combined heater unit 103 is supplied with power that is supplied from an electric company or power that is obtained by the power generation unit. In Figure 6, the power path is denoted by the alternate long and short dashed lines, and the water path is denoted by the broken lines, and the hot water path is denoted by the thick solid lines.

Hot water storage unit 102 includes a tank that stores hot water, a pump that pumps hot water out from the tank, and a temperature sensor that measures the temperature of the hot water in the tank. During operation of the space heating system, the temperature of the hot water that is measured by the temperature sensor is sent to controller 104 as an electric signal, and the controller controls operation of the pump and the application of current to combined heater unit 103 based on the temperature that is measured.

Next, the operation of the above-described space heating system will be explained.

Although this space heating system is intended to use the produced hot water for both a hot water supply and for space heating, description of the operation for supplying hot water will be omitted because it is similar to that in conventional hot water space heating systems, and the operation for space heating will be explained.

During space heating, combined heater unit 103 is operated. During operation of combined heater unit 103, hot water is caused to be circulated between the tank in hot water storage unit 102 and combined heater unit 103. During that time, additional hot water is not produced unless the hot water in the tank is used. Therefore, the temperature of the hot water in the tank is lowered as time advances.

The temperature of the hot water in hot water storage unit 102 is measured by a temperature sensor in real time or at some intervals, and the result is sent to controller 104. In controller 104, a temperature for controlling the application of current, which is used as the basis for controlling the application of current to combined heater unit 103, is set. If the measured temperature is not lower than the temperature for controlling the application of current, then no current is applied to the heating element in combined heater unit 103, and only space heating using hot water circulation is conducted. In general, the temperature of the hot water that is produced by heat source device 101 is 60 to 80°C. In those cases, the temperature for controlling the application of current is, for example, 50°C. Meanwhile, if the temperature of the hot water in the tank is lower than the temperature for controlling the application of current, then current is applied to the heating element in combined heater unit 103, and both heating of hot water in combined heater unit 103 and space heating are conducted using the heat that is generated by current that is applied. The heated hot water in combined heater unit 103 returns to the tank in hot water storage unit 102, raising the temperature of the hot water in the tank.

As a result of performing the above-described control, the temperature of the hot water in hot water storage unit 102 is kept substantially constant regardless of whether the hot water is used for hot water supply or not. Accordingly, conventional re-heating of the hot water in hot water storage unit 102 is not required. In this example, similar to the conventional art, energy is consumed to heat the hot water whose temperature has become lower. However, different from the conventional art, the hot water in hot water storage unit 102 is not heated, and instead, the hot water in combined heater unit 103 is heated. This allows the majority of energy that is used to heat hot water to be used for space heating, and consequently, a highly-efficient space heating system can be obtained. In conventional hot water space heating systems, it is said that approximately 50% of energy that is used to heat the hot water in hot water storage unit 102 is lost before hot water is introduced into the building. However, this space heating system hardly causes such a loss.

Furthermore, since the temperature of the hot water in hot water storage unit 102 is kept substantially constant, there is no need to excessively increase the tank capacity of hot water storage unit 102 as a result of the temperature decreases which occurs due to space heating. The tank capacity can be optimally determined according to the power generation capacity or heating capability of heat source device 101, thereby allowing a decrease in tank capacity. The dimensions of hot water storage unit 102 are mainly occupied by the tank, and thus, by decreasing the tank capacity, hot water storage unit 102 can be downsized.

Moreover, although the temperature for controlling the application of current is constant in the above-described examples, the temperature of hot water that is required for space heating may also vary depending on the heat load.

For example, if the heat load is low, heating by the application of current is not required in some cases because the hot water can be used for space heating even if the temperature is low, causing no need for heating by application of a current.

Meanwhile, if the heat load is high, the hot water may possibly be used also as a hot water supply. In this case, the hot water in the tank in hot water storage unit 102 may be reduced even if the temperature of the hot water is high. Therefore, satisfactory space heating cannot be conducted by the hot water. In these cases, it is preferable to conduct space heating by the application of current to combined heater unit 103. Also, when heat source device 101 is a heat pump, the coefficient of performance (COP) for producing hot water tends to be lowered as the air temperature becomes lower. Therefore, considering heat loss from the pipe as well, it is more efficient, in some cases, to directly heat the water by the heating element in combined heater unit 103. Also, when heat source device 101 is a power generation unit, there may be cases in which the electricity charge is less expensive than the fuel charge as a result of comparing the amount of spent fuel with the electricity charge of an electricity company. In those cases, it will be more efficient to conduct space heating by the application of current to the heating element in combined heater unit 103.

Therefore, it is preferable to change the temperature for controlling the application of current in accordance with the heat load. In general, the heat load depends on the air temperature, and as the air temperature is higher, the heat load will be lower, whereas as the air temperature is lower, the heat load will be higher. Accordingly, the space heating system may further include an air temperature sensor (not shown) that measures air temperature, and controller 104 may also be adapted to control the application of current to combined heater unit 103 based on the result of measuring the air temperature by the air temperature sensor and the result of measuring the water temperature by the temperature sensor that measures the temperature in the tank.

For instance, the temperature for controlling the application of current can be controlled by taking into account the heat load (air temperature) as described below. First, controller 104 is provided in advance with a table of the temperature for controlling the application of current s, the table that uses air temperature as a parameter. In this table, air temperatures are classified into temperature ranks, for example, by every 5°C in the range of -30°C to +50°C, and a temperature for controlling the application of current is set in accordance with each rank. The temperature for controlling the application of current is generally set to be lower as the air temperature becomes higher. When the result of the measurement by the air temperature sensor is sent to controller 104 as an electric signal, controller 104 determines the temperature for controlling the application of current according to the rank in the table based on the air temperature data that is received. Subsequently, controller 104 controls the application of current to combined heater unit 103, in a similar manner as described above, based on the temperature for controlling the application of current that is set. If the rank is changed due to a temperature change, controller 104 controls the application of current to combined heater unit 103 based on the temperature for controlling the application of current that is set according to the updated rank.

As described above, by changing the temperature for controlling the application of current according to the heat load, more efficient heating is possible. In this embodiment, the temperature for controlling the application of current is automatically changed by controller 104 according to the air temperature, but may be manually changed by a user.

## Claims

1. A combined heater comprising:
a hot water pipe for allowing hot water to flow therethrough; and
a heating element that is secured in contact with an outer peripheral surface or an inner peripheral surface of said hot water pipe, said heating element generating heat by an application of current.

2. The combined heater according to claim 1, wherein said heating element is a metal pipe that is disposed coaxially with said hot water pipe.

3. The combined heater according to claim 1, wherein said heating element is a heating cable that is spirally provided on said outer peripheral surface of said hot water pipe or on said inner surface of said hot water pipe, or in a pipe wall of said hot water pipe.

4. The combined heater according to claim 1, further comprising:
a panel-shaped base material having a groove that is formed on an upper surface thereof, said base material accommodating said hot water pipe in said groove; and
a heat-uniformizing material that is provided over said upper surface of said base material.

5. A combined heater comprising:
a hot water pipe for allowing hot water to flow therethrough;
a panel-shaped base material having a groove that is formed on an upper surface thereof, said base material accommodating said hot water pipe in said groove;
a heating element that is secured to said upper surface of said base material, to a lower surface of said base material, or inside of said base material, said heating element generating heat by an application of current; and
a heat-uniformizing material that is provided over said upper surface of said base material.

6. The combined heater according to claim 5, wherein said heating element is a sheet-shaped heating element.

7. A space heating system comprising:
a combined heater according to claim 1;
a heat source device that produces hot water by heating water;
a hot water storage unit that stores the hot water, the hot water being produced by said heat source device;
a hot water pipe for circulating the hot water in said hot water storage unit between said combined heater and said hot water storage unit; and
a controller that controls operation of said heating element in said combined heater.

8. The space heating system according to claim 7, wherein:
said hot water storage unit further includes a tank that stores the hot water, and a temperature sensor that measures temperature of the hot water in said tank; and
said controller applies current to said heating element when the temperature that is measured is lower than a predetermined temperature for controlling application of current, and discontinues an application of current to said heating element when the temperature that is measured is not lower than the temperature for controlling the application of current .

9. The space heating system according to claim 8, wherein the temperature for controlling the application of current is variable.

10. The space heating system according to claim 9, further comprising an air temperature sensor that measures air temperature, wherein said controller changes the temperature for controlling the application of current based on air temperature that is measured by said air temperature sensor.

11. The space heating system according to claim 7, wherein said heat source device is a power generation unit.

12. The space heating system according to claim 7, wherein said heat source device is a heat pump.

13. A space heating system comprising:
a combined heater according to claim 5;
a heat source device that produces hot water by heating water;
a hot water storage unit that stores the hot water, the hot water being produced by said heat source device;
a hot water pipe for circulating the hot water in said hot water storage unit between said combined heater and said hot water storage unit; and
a controller that controls operation of said heating element in said combined heater.

14. The space heating system according to claim 13, wherein
said hot water storage unit further comprises a tank that stores hot water, and a temperature sensor that measures temperature of the hot water in said tank; and
said controller applies current to said heating element when the temperature that is measured is lower than a predetermined temperature for controlling the application of current, and discontinues an application of current to said heating element when the temperature that is measured is not lower than the temperature for controlling the application of current.

15. The space heating system according to claim 14, wherein the temperature for controlling the application of current is variable.

16. The space heating system according to claim 15, further comprising an air temperature sensor that measures air temperature, wherein said controller changes the temperature for controlling the application of current based on the air temperature that is measured by said air temperature sensor.

17. The space heating system according to claim 13, wherein said heat source device is a power generation unit.

18. The space heating system according to claim 13, wherein said heat source device is a heat pump.
